# EUROPÄISCHE PATENTSCHRIFT

(11) **EP 2 335 958 B1**
(45) Veröffentlichungstag und Bekanntmachung des Hinweises auf die Patenterteilung: **08.05.2013**
(21) Anmeldenummer: 09177319.2
(22) Anmeldetag: 27.11.2009
(51) Int. Cl.: B60J 10/00, B60J 10/02

(54) **Klemmhalter sowie Scheibenbaugruppe mit einem solchen Klemmhalter und Verfahren zur Herstellung einer solchen Scheibenbaugruppe**
Retaining clip, window assembly with such a retaining clip and method for producing such a window assembly
Agrafe de retenue, assemblage de fenêtre doté d'une telle agrafe et procédé de fabrication d'une telle agrafe

(43) Veröffentlichungstag der Anmeldung: 22.06.2011
(73) Patentinhaber: DURA Automotive Body and Glass Systems GmbH, 58840 Plettenberg (DE)
(72) Erfinder: Schulte, Martin, 58802, Balve (DE); Specht, Benedikt, 59846, Sundern (DE)
(74) Vertreter: Bungartz, Klaus Peter

(56) Entgegenhaltungen:
- JP-A- 7 265 222
- US-A1- 2003 075 949
- US-B1- 6 546 683
- SENGE C: "VERFAHRENS- UND FERTIGUNGSTECHNIK ZUR GLASUMSPRITZUNG IN TPE PROCESS- AND PRODUCTION TECHNOLOGY FOR TPE GLASS-ENCAPSULATION" TPE IN DER PROZESSKETTE, XX, XX, 1. Januar 2002 (2002-01-01), Seiten 207-224,I, XP001148259

## Beschreibung

Die Erfindung betrifft einen Klemmhalter, der dazu bestimmt ist, integraler Bestandteil einer eine Fahrzeugkarosserieöffnungen verschließenden Scheibenbaugruppe zu sein, und der eingerichtet ist, Anbauteile an der endmontierten Scheibenbaugruppe klemmend zu halten, aufweisend zumindest einen Klammerabschnitt, auf den das Anbauteil bei endmontierter Scheibenbaugruppe klemmend aufsteckbar ist, sowie einen Verbindungsabschnitt, der dazu bestimmt ist, mit einem Rahmenabschnitt der Scheibenbaugruppe unlösbar verbunden zu werden. Die Erfindung betrifft außerdem eine Scheibenbaugruppe mit einem Klemmhalter der vorstehend genannten Art.

Klemmhalter dieser Art sind aus der DE 198 18 153 B4, der hierzu korrespondierenden US 6,546,683 B1 sowie aus dem Aufsatz des Erfinders unter dem Titel "Verfahrens- und Fertigungstechnik zur Glasumspritzung in TPE" innerhalb der Buchveröffentlichung "TPE in der Prozesskette", herausgegeben vom Verein Deutscher Ingenieure (ISBN: 3-183234246-0) bekannt. Dort ist eine Scheibeneinheit beschrieben und beansprucht, die eine Haltevorrichtung aufweist, an der weitere Anbauteile, zum Beispiel Zierleisten, nach der Endmontage der Scheibeneinheit an der Fahrzeugkarosserie befestigt werden können. Die Haltevorrichtung besteht aus einer Halteleiste und einer auf die Halteleiste nachträglich aufzusteckenden Halteklammer. Die Halteleiste ist als Einlegekörper ausgeführt, der sich beim Spritzgussvorgang, bei dem die Scheibe mit einem als Spritzformteil ausgebildeten Rahmen umspritzt wird, unlösbar mit dem Rahmen verbindet.

Nachteilig an der vorbekannten Ausführung eines Klemmhalters ist, dass zur Bestückung der Halteleiste mit der Halteklammer ein zusätzlicher Arbeitsschritt erforderlich ist. Die Scheibeneinheit kann erst nach dem Umspritzen mit dem Rahmen durch Aufsetzen der Halteklammer auf die Halteleiste komplettiert werden. Dieser zusätzliche Arbeitsschritt kann bei unsachgemäßer Montage zur Beschädigung der Halteleiste oder sonstiger Teile der Scheibeneinheit führen. Damit gehen nicht nur ein logistisch erhöhter Aufwand sondern auch zusätzliche Qualitätssicherungsmaßnahmen einher. Außerdem muss für die Herstellung der Scheibeneinheit ein weiteres Bauteil gehandhabt werden und die beinahe fertige Scheibeneinheit muss einem weiteren Produktionsabschnitt zugeführt werden. Da die Halteklammer von Hand auf die Halteleiste aufzustecken ist, ist eine weitgehend automatisierte Herstellung der Scheibeneinheit zumindest für diesen Arbeitsschritt zu unterbrechen. Des weiteren sind, wie die DE 198 18 153 B4 zeigt, Halteleiste und Halteklammer durch konstruktiv verhältnismäßig aufwendige Maßnahmen aufeinander abzustimmen, damit bei der dort beschriebenen mehrteiligen Ausführung ein ungewolltes Lösen beider Bauteile voneinander während des Fahrzeugbetriebs sicher verhindert werden kann.

Weiter ist aus der US 2003/0075949 A1 bekannt, einen Klemmhalter der eingangs genannten Art, bei dem Klammerabschnitt und Verbindungsabschnitt einstückig aus Kunststoff hergestellt sind, gemeinsam in ein Spritzgusswerkzeug einzulegen und mit dem einzuspritzenden Material des Rahmenabschnitts zu umspritzen. Nachteilig an dieser Ausführungsform ist jedoch, dass durch die Ausgestaltung des Klammerabschnitts als Kunststoffbauteil die Abzugskräfte eines später angebrachten Anbauteils gering sind. Außerdem weist die in der US 2003/0075949 A1 beschriebene Ausführung eine ungünstig große Bauhöhe auf.

Aufgabe der Erfindung ist es daher insbesondere, die Fertigung eine Scheibenbaugruppe zu vereinfachen, ein höheres Maß an Qualitätssicherheit zu erzielen und die Anzahl der zu handhabenden Teile bei der Fertigung zu verringern. Außerdem ist zu gewährleisten, dass die Abzugskräfte von am Klemmhalter angebrachten Anbauteilen ausreichend hoch sind und der Klemmhalter flach aufbaut.

Zur Lösung dieser Aufgaben ist der Klemmhalter derart ausgebildet, dass Verbindungsabschnitt und Klammerabschnitt zur Fertigstellung der Scheibenbaugruppe gemeinsam in ein Spritzgusswerkzeug einlegbar sind, wobei der Klammerabschnitt als Metallklammer ausgebildet ist und der Verbindungsabschnitt den Klammerabschnitt unter Ausbildung eines umlaufenden Dichtbereichs nach außen hin überragt.

Damit wird ein Klemmhalter zur Verfügung gestellt, bei dem der Arbeitsschritt des Aufsetzens der Halteklammer zur Komplettierung einer Scheibenbaugruppe nach dem Umspritzen der Scheibe mit dem Rahmenabschnitt entfällt. Die Scheibenbaugruppe ist - mit Ausnahme des bevorzugt des erst nachträglich zu montierenden Anbauteils - bereits im Spritzgusswerkzeug komplettiert.

Die Möglichkeit, den Klemmhalter derart zu gestalten, dass dieser vollständig - also Verbindungsabschnitt und Klammerabschnitt gleichzeitig - in ein Spritzgusswerkzeug einlegbar sind, wird dadurch realisiert, dass der Verbindungsabschnitt eine lichte Projektion des Klammerabschnitts auf den Verbindungsabschnitt unter Ausbildung eines umlaufenden Dichtbereichs nach außen hin überragt.

Klammerabschnitt und Verbindungsabschnitt können auf verschiedenste Weise ausgebildet sein. In einer bevorzugten Ausführungsform ist der Verbindungsabschnitt als plattenförmiges Kunststoffteil ausgebildet. Dabei kann der Klammerabschnitt von einem Klammerteil gebildet sein, der klemmend auf einem den Verbindungsabschnitt ausbildenden Verbindungsteil gehalten ist. Klammerteil und Verbindungsteil sind dabei zwei ursprünglich voneinander getrennte Bauteile. Es kann auch vorgesehen sein, dass der Klammerabschnitt von einem Klammerteil gebildet ist, der von einem den Verbindungsabschnitt ausbildenden Verbindungsteil umspritztist.

In einer anderen Ausführungsvariante sind der Verbindungsabschnitt und der Klammerabschnitt werkstoffeinstückig ausgeführt. Insbesondere kann vorgesehen sein, dass der Klemmhalter ein werkstoffeinstückiges Blechformteil ist, an dem integral der Klammerabschnitt und der Verbindungsabschnitt ausgebildet sind.

Um eine gute Haftung zwischen Verbindungsabschnitt und dem Rahmenabschnitt der Scheibenbaugruppe zu gewährleisten, kann der Verbindungsabschnitt mit einem Haftvermittler versehen sein.

Als mit zur Erfindung gehörig und beansprucht wird auch eine auf die Öffnung einer Kraftfahrzeugkarosserie aufsetzbare Scheibenbaugruppe mit einer Fensterscheibe, einem an der Fensterscheibe randseitig vorgesehenen Rahmenabschnitt und einem Klemmhalter zur Anbringung von Anbauteile an der endmontierten Scheibenbaugruppe angesehen, die als Halter ein Klemmhalter nach der vorstehend beschriebenen Art aufweist.

Ebenfalls beschrieben wird ein Verfahren zur Fertigung einer Scheibenbaugruppe mit mindestens einer Fensterscheibe, einem an der Fensterscheibe randseitig vorgesehenen Rahmenteil und einem Halter zur späteren Anbringung weiterer Anbauteile an der endmontierten Scheibenbaugruppe angesehen, dass als Verfahrensschritte das Einlegen eines Klemmhalters nach der vorstehend beschriebenen Art und einer Fensterscheibe in ein Spritzgusswerkzeug sowie Umspritzen des Klemmhalters und der Fensterscheibe mit dem Rahmenteil zur Fertigstellung der Scheibenbaugruppe umfasst.

Weitere Merkmale und Vorteile der Erfindung ergeben sich aus den Unteransprüchen und aus der nachfolgenden Beschreibung bevorzugter Ausführungsbeispiele anhand der Zeichnungen.

In den Zeichnungen zeigt:
Fig. 1 eine veranschaulichende Seitenansicht einer Scheibenbaugruppe mit eingezeichneter Schnittlinie A-A,
Fig. 2a eine erste mögliche Schnittansicht gemäß der Schnittlinie A-A in Figur 1 gemäß einer ersten Ausführungsvariante einer Scheibenbaugruppe mit integriertem Klemmhalter nach einer ersten Ausführungsform,
Fig. 2b eine erste Ausführungsform eines Klemmhalters entsprechend der in Fig. 2a gezeigten Schnittansicht,
Fig. 3a eine zweite mögliche Schnittansicht gemäß der Schnittlinie A-A in Figur 1 gemäß einer zweiten Ausführungsvariante einer Scheibenbaugruppe mit integriertem Klemmhalter nach einer zweiten Ausführungsform,
Fig. 3b eine zweite Ausführungsform eines Klemmhalters entsprechend der in Fig. 3a gezeigten Schnittansicht,
Fig. 4a eine dritte mögliche Schnittansicht gemäß der Schnittlinie A-A in Figur 1 gemäß einer dritten Ausführungsvariante einer Scheibenbaugruppe mit integriertem Klemmhalter nach einer dritten Ausführungsform,
Fig. 4b eine dritte Ausführungsform eines Klemmhalters entsprechend der in Fig. 4a gezeigten Schnittansicht,
Fig. 5a eine vierte mögliche Schnittansicht gemäß der Schnittlinie A-A in Figur 1 gemäß einer vierten Ausführungsvariante einer Scheibenbaugruppe mit integriertem Klemmhalter nach einer vierten Ausführungsform,
Fig. 5b eine vierte, zweiteilige Ausführungsform eines Klemmhalters entsprechend der in Fig. 4a gezeigten Schnittansicht, und
Fig. 5c den Klemmhalter aus Fig. 5b vor dem Zusammenfügen von Verbindungsteil und Klammerteil.

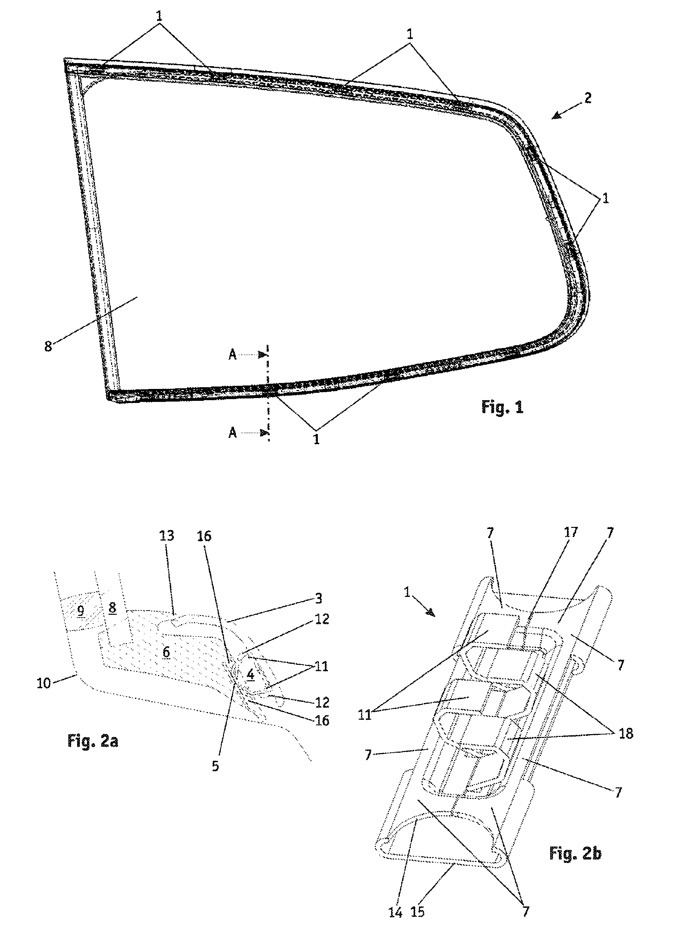

In Figur 1 ist zur Veranschaulichung und weitergehenden Erläuterung der Erfindung eine Scheibenbaugruppe 2, hier insbesondere die Baugruppe einer hinteren Seitenscheibe, mit eingezeichneter Schnittlinie A-A gezeigt. Die Scheibenbaugruppe 2 weist eine Mehrzahl von Klemmhaltern 1 auf, die entlang des Randes der Scheibenbaugruppe 2 verteilt angeordnet sind.

Figuren 2a, 3a, 4a und 5a zeigen jeweils eine mögliche Schnittansicht gemäß der Schnittlinie A-A in Figur 1 entsprechend verschiedener Ausführungsvarianten einer Scheibenbaugruppe 2 mit integriertem Klemmhalter 1. Die Scheibenbaugruppe 2 umfasst eine Glas- oder Kunststoffscheibe 8, die hier beispielhaft mittels einer Kleberaube 9 mit dem Karosserieblech 10 eines Kraftfahrzeugs verbunden ist. An die Scheibe 8 angeformt ist ein Rahmenabschnitt 6 aus einem ersten Kunststoffmaterial. Mittels eines Klemmhalters 1 wird Anbauteil 3, zum Beispiel eine Zierleiste, gehalten. Dabei drücken Klemmflügel 11 des Klemmhalters 1 innenseitig gegen Haltestege 12 des Anbauteils 3 und verrasten dieses somit an der Scheibenbaugruppe 2. Das obere, freie Ende des Anbauteils 3 wird von einer am Rahmenabschnitt 6 ausgebildeten Sicht- bzw. Dichtlippe 13 übergriffen.

Bei der Herstellung der Scheibenbaugruppe 2 wird die Scheibe 8 mit dem Kunststoffmaterial des Rahmenabschnitts 6 umspritzt. Dabei geht man zunehmend dazu über, für das Umspritzen der Scheibe 8 statt PVC den Kunststoff TPE zu verwenden. Nachteilig an der Verwendung von TPE ist allerdings, dass dieser Kunststoff aufgrund des gegenüber PVC geringeren E-Moduls nicht die Abzugskräfte für die am Rahmenabschnitt 6 bzw. am Klemmhalter 1 angebrachten Anbauteile 3, beispielsweise Zierleisten oder dergleichen, gewährleistet, die PVC gewährleisten würde. Aus diesem Grund ist man bestrebt, die Klemmhalter 1 für die Anbauteile 3 mit einem Verbindungsabschnitt 5 derart in den Werkstoff des Rahmenabschnitts 6 einzubetten, dass trotz des geringeren E-Moduls des für den Rahmenabschnitt 6 verwendeten Werkstoffs eine ausreichende Klemmkraft und eine ausreichende Abzugssicherheit gewährleistet ist.

Gleichzeitig ist man bestrebt, die Herstellung der Scheibenbaugruppe möglichst effizient zu gestalten und die Gefahr etwaiger Herstellungs- oder Qualitätsmängel durch eine geschickte Verfahrensführung von vorne herein zu minimieren.

Dies kann, wie in den Figuren 2a bis 5c dargestellt und nachfolgend beschrieben ist, auf verschiedene Weise erreicht werden. Die nachfolgende Beschreibung einer bestimmten Figur ist, sofern die Beschreibung nicht ausschließlich spezifische konstruktive Gestaltungsmerkmale der in der jeweiligen Figur konkret dargestellten Ausführungsvariante betrifft, auf die weiteren Figuren übertragbar, auch wenn dies nicht gesondert hervorgehoben ist. Der Fachmann wird erkennen, welche der jeweils beschriebenen Merkmale zwischen den einzelnen Ausführungsformen austauschbar sind.

Figuren 2a und 2b stellen eine erste Ausführungsvariante der Scheibenbaugruppe 2 bzw. des Klemmhalters 1 dar. Der Klemmhalter 1 ist dabei integraler Bestandteil der Scheibenbaugruppe 2 und als Blechformteil ausgebildet. Bevorzugt wird als Werkstoff nicht rostender Stahl oder Stahl mit einer vor Korrosion schützenden Oberflächebeschichtung verwendet. Wie auch die Scheibe 8 wird der Klemmhalter 1 bei der Herstellung der Scheibenbaugruppe 2 in eine Spritzgussform eingelegt und beim Einspritzvorgang zur Ausbildung des Rahmenabschnitts 6 umspritzt. Dadurch ist der Klemmhalter 1 in den Rahmenabschnitt 6 eingebettet und untrennbar damit verbunden. Die formschlüssige Einbettung in den Rahmenabschnittswerkstoff gewährleistet auch bei der bevorzugten Wahl von TPE als Werkstoff für den Rahmenabschnitt 6 hohe Abzugskräfte, ohne dass dabei die Gefahr bestünde, dass der Rahmenabschnitt 6 bei Belastung schaden nimmt.

Wie in Figur 2b erkennbar weist der Klemmhalter 1 einen Klammerabschnitt 4 sowie einen Verbindungsabschnitt 5 auf. Der Verbindungsabschnitt 5 ist der Teil des Klemmhalters 1, der in den Rahmenabschnitt 6 eingebettet oder mit diesem zumindest in unmittelbarem Kontakt steht. Der Klammerabschnitt 4 ist der Teil des Klemmhalters 1, der zur Halterung der Anbauteile 3 aus dem Rahmenabschnitt der Scheibenbaugruppe 2 hervor ragt.

Bei dem in Figur 2b gezeigten Klemmhalter 1 weist der Verbindungsabschnitt 5 die Besonderheit auf, dass durch die Ausgestaltung des Verbindungsabschnitts 5 durch zwei übereinander liegenden Blechlagen 14 und 15 Hinterschnitte 16 entstehen, in die der flüssige Kunststoff während des Spritzgussvorgangs eindringen kann, so dass der Klemmhalter 1 nach dem Erkalten des Materials des Rahmenabschnitts 6 formschlüssig im Rahmenabschnitt 6 eingebettet ist.

Gleichzeitig sind Verbindungsabschnitt 5 und Klammerabschnitt 4 des Klemmhalters 1 derart konstruiert, dass auf der nach oben weisenden Oberfläche des Verbindungsabschnitts 5 ein Dichtbereich bzw. eine Dichtfläche 7 ausgebildet ist, wobei dieser Dichtbereich 7 den Klammerabschnitt 5 seitlich überragt. Dies ermöglicht, dass der Klemmhalter 1 mit aus dem Spritzgusswerkzeugvolumen herausragendem Klammerabschnitt 5 in das Spritzgusswerkzeug eingelegt oder eingeclipst werden kann, wobei der umlaufende Dichtbereich 7 gegen die Innenwandung des Spritzgusswerkzeugs dichtend anliegt und verhindert, dass eingespritzter Kunststoff an dem Verbindungsabschnitt 5 vorbei den Klammerabschnitt erreichen kann.

Das Spritzgusswerkzeug selbst weist zur Aufnahme des Klammerabschnitts bzw. der Klemmflügel 11 eine Aufnahme auf, die bevorzugt derart bemessen und auf den Klemmhalter abgestimmt ist, dass der Klemmhalter selbst zentrierend in die Aufnahme einlegbar ist und sich darin die Dichtwirkung unterstützend hineinzieht oder zumindest fest in der Aufnahme verklemmt.

Es können aber selbstverständlich auch alternative oder zusätzliche Maßnahmen ergriffen werden, den Klemmhalter bzw. das Verbindungselement dichtend am Spritzgusswerkzeug zu befestigen oder zu halten. Beispielsweise kann nach Einlegen des Klemmhalters in die Aufnahme von außen ein Unterdruck innerhalb der Aufnahme erzeugt werden. Bei metallischen Klemmhaltern bietet sich dabei insbesondere der Einsatz von magnetischer Hilfsmittel, also insbesondere von Dauermagneten oder Elektromagneten an, die den Klemmhalter fest an die inneren Spritzgusswerkzeugoberfläche heranziehen, so dass der Dichtbereich des Klemmhalters fest am Spritzgusswerkzeug anliegt.

Der Klemmhalter gemäß Figur 2b bildet mit einer ersten, oberen Blechlage 14 einen nach innen einfallenden, muldenartigen Bereich aus, an dessen Grund die nach unten weisende Seite der oberen Blechlage 14 und die nach oben weisende Seite der zweiten, unteren Blechlage 15 umlaufend fest aneinander anliegen. Damit wird vermieden, dass der eingespritzte Kunststoff während des Spritzgießvorgangs nicht doch ungewollt zwischen den Blechlagen 14 und 15 hindurch und an den Füßen der Klemmflügel 11 vorbei bis zum Klammerabschnitt 4 des Klemmhalters 1 vordringen kann. Am Stoß 17, der längs des Klemmhalters 1 mittig durch die obere Blechlage 14 verläuft, liegen die jeweiligen Kanten der Blechlage 14 stirnseitig fest und gegenüber dem eingespritzten Kunststoff ausreichend abdichtend auf Stoß aneinander an.

Um ein leichtes Aufstecken der Anbauteile 3 zu ermöglichen, bei dem die Klemmflügel 11 durch die Aufsteckbewegung unterstützt nach innen einfedern, weisen die Klemmflügel 11 in einem oberen, nach außen gewandten Bereich Aufsetzschrägen 18 auf. Die Klemmflügel 11 sind bevorzugt derart ausgestaltet, dass sie sich ausgehend von einer ersten Seite des Verbindungsabschnitts 5 diagonal nach oben und in Richtung der zweiten Seite des Verbindungsabschnitts 5 erstrecken, um dann in einigem Abstand zum Verbindungsabschnitt 5 wieder zur ersten Seite des Verbindungsabschnitts 5 hin gekrümmt zu sein. Der letzte Abschnitt eines Klemmflügels 11 verläuft im Wesentlichen parallel zur vom Verbindungsabschnitt 5 gebildeten Ebene und dient zur Abstützung des Anbauteils 3 und definiert dessen Abstand zum Rahmenabschnitt 6, ist aber in der in den Figuren dargestellten Ausprägung nicht zwingend erforderlich. Die Klemmflügel 11 sind dabei derart ausgebildet, dass sie wechselseitig ineinander greifen.

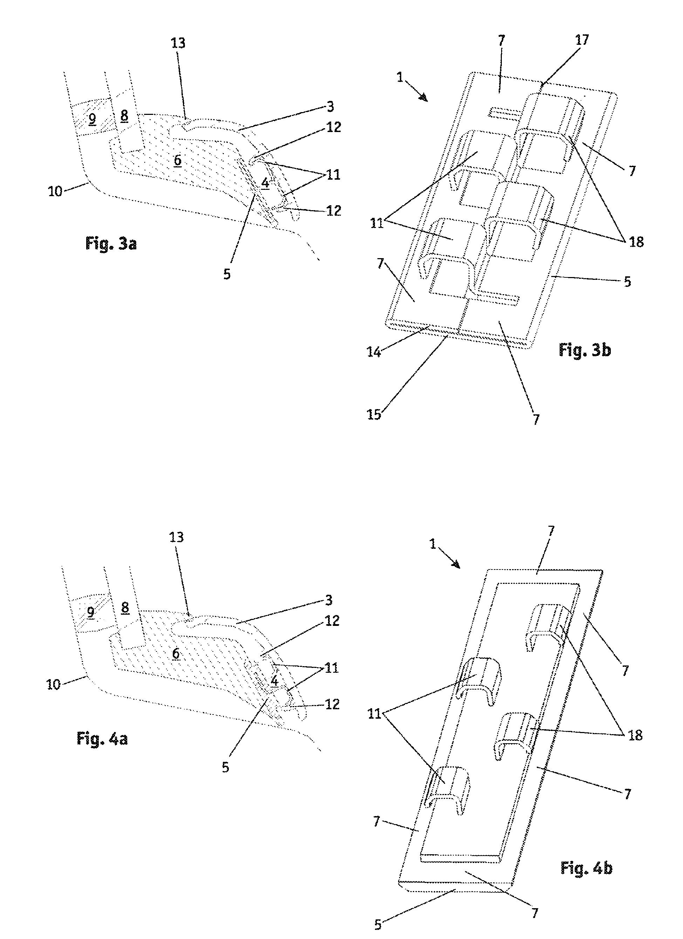

Auch bei der in den Figuren 3a und 3b gezeigten Ausführungsvariante handelt es sich um ein Blechformteil, dass im Bereich des Verbindungsabschnitts 5 eine erste, obere und eine zweite, untere Blechlage 14 und 15 aufweist. Wie die zuvor zu Figuren 2a und 2b beschriebene Ausführungsform wird der Klemmhalter 1 vor dem Spritzguss in das Werkzeug eingelegt oder eingeclipst und anschließend mit dem Material des Rahmenabschnitts 6 umspritzt.

Wegen des nicht vorhandenen Abstands zwischen der oberen, ersten Blechlage 14 und der unteren, zweiten Blechlage 15 sind bei dem Ausführungsbeispiel gemäß Figur 3a und 3b keine Hinterschnitte ausgebildet, so dass der Klemmhalter 1 nicht in vergleichbarem Maße wie der Klemmhalter aus Figur 2b formschlüssig in das Kunststoffmaterial des Rahmenabschnitts 6 eingebettet wird. Daher bietet es sich an, zumindest die mit dem Kunststoff des Rahmenabschnitts 6 in Kontakt stehenden Oberflächen des Verbindungsabschnitts 5 zusätzlich mit einem Haftvermittler zu versehen.

Auch an dem Klemmhalter 1 aus Figur 3b ist zu erkennen, dass die Oberseite der ersten, oberen Blechlage 14 den Klammerabschnitt 4, insbesondere also die Klemmflügel 11, nach außen überragt, um einen umlaufenden Dichtbereich bzw. eine umlaufende Dichtfläche 7 auszubilden, der bzw. die zur Abdichtung im Werkzeug dient. Und auch hier gelten die schon zu Figur 2b gemachten Ausführungen zu den dichtend aneinander liegenden Oberflächen der beiden Blechlagen 14 und 15.

Anders als bei dem Klemmhalter aus Figur 2b weisen freien Enden der Klemmflügel 11 beim Ausführungsbeispiel in Figur 3b nach unten, wobei wie auch bei dem Klemmhalter nach Figur 2b im Bereich der letzten vor dem freien Ende liegenden Krümmung eine nach außen weisende Aufsetzschräge 18 vorgesehen ist, die beim Aufsetzen des Anbauteils 3 das Einfedern der Klemmflügel 11 unterstützt. Wie zuvor beschrieben definiert die nach oben weisende Fläche der Klemmflügel 11 den Abstand von Anbauteil 3 und Rahmenabschnitt 6.

Ein Vorteil der Variante nach den Figuren 3a und 3b gegenüber der in den Figuren 2a und 2b gezeigten Variante ist insbesondere, dass der Klemmhalter, insbesondere der Verbindungsabschnitt, flacher aufbaut und somit eine geringere Rahmenabschnittshöhe realisierbar ist.

Figuren 4a und 4b zeigen eine weitere Ausführungsvariante eines Klemmhalters 1. Dieser ähnelt hinsichtlich der Ausrichtung und Anordnung der Klemmflügel 11 des Klammerabschnitts 4 dem Klemmhalter aus Figur 3b. Der Klammerabschnitt 4 ist als Blechformteil und der Verbindungsabschnitt 5 als Spritzgussteil aus Kunststoff gefertigt. Bei der Herstellung des Klemmhalters 1 nach Figur 3b wird die den Klammerabschnitt 4 bildende Metallklammer mit dem Kunststoff des Verbindungsabschnitts 5 umspritzt und in diesem formschlüssig eingebettet. Der zur Herstellung des Verbindungsabschnitts 5 verwendete Kunststoff ist dabei vorzugsweise ein Kunststoff, der gegenüber dem des Rahmenabschnitts 6 der Scheibenbaugruppe 2 ein höheres E-Modul aufweist und sich beim Umspritzen des Klemmhalters 1 gut mit dem Kunststoff des Rahmenabschnitts 6, also insbesondere mit TPE, verbindet, um hohe Abzugskräfte zu gewährleisten. Vorzugsweise wird ein thermoplastischer Kunststoff verwendet. Auch die zusätzliche Verwendung eines Haftvermittlers kann sich anbieten.

Wie auch bei den zuvor beschriebenen Klemmhaltern ragt die obere Fläche des Verbindungsabschnitts 5 gegenüber den Klemmflügeln 11 unter Ausbildung eines Dichtbereichs bzw. eine Dichtfläche 7 seitlich hervor, so dass bei Umspritzen der Scheibe 8 und des Klemmhalters 1 mit dem Kunststoff des Rahmenabschnitts 6 eine sichere Abschottung des Klammerabschnitts 4 im Spritzgusswerkzeug gewährleistet ist.

Alle zuvor beschriebenen Klemmhalter sind zwar nicht zwingend werkstoffeinstückig, also in einem Stück und aus einem Werkstoff wie die in Figuren 2b und 3b dargestellten Klemmhalter, gefertigt, zumindest aber als ein einstückiges Bauteil mit unlösbar miteinander verbundenen Komponenten ausgebildet.

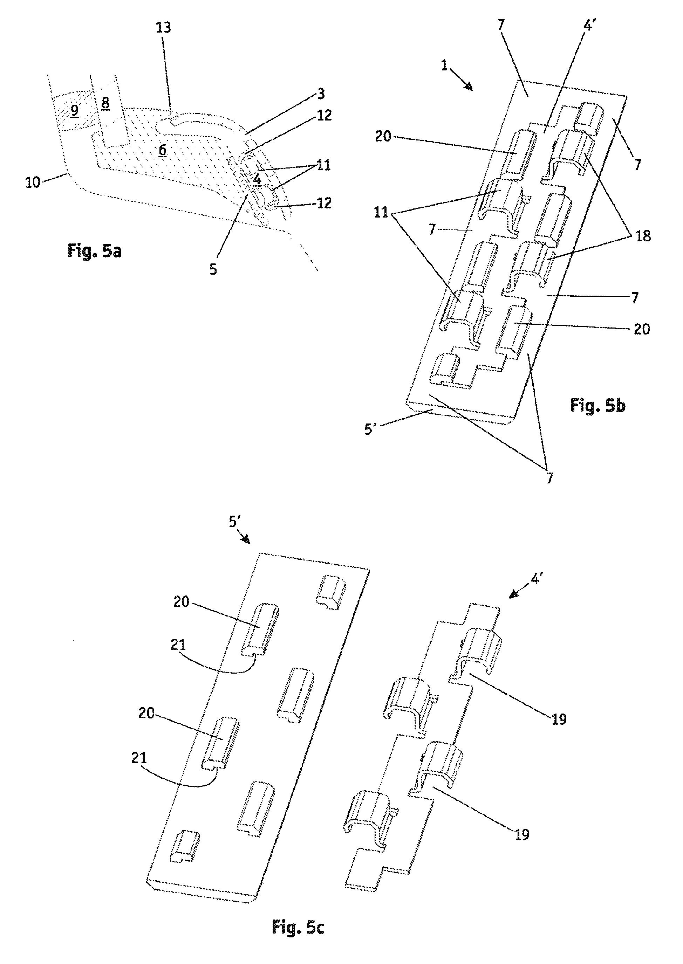

Figuren 5a, 5b und 5c zeigen eine vierte Ausführungsvariante einer Scheibenbaugruppe 2 und eines Klemmhalters 1. Der Klammerabschnitt 4 von einem als separatem Bauteil vorliegenden Klammerteil 4' in Form einer Metallklammer und der Verbindungsabschnitt 5 von einem als separatem Bauteil vorliegenden Verbindungsteil 5' in Form eines plattenförmigen Spritzgussteil aus vorzugsweise thermoplastischem Kunststoff gebildet. Das Klammerteil 4' mit seinen Klemmflügeln 11 ist allerdings nicht unlösbar in das Verbindungsteil 5' eingebettet, sondern über eine lösbare Steck- oder Rastverbindung auf das Verbindungsteil 5' aufgesetzt.

Eine solche lösbare Verbindung hat insbesondere auch den Vorteil, dass das Klammerteil 4' bei bestimmten Anwendungsfällen nicht zwingend an dem Verbindungsteil 5' und damit am Rahmenabschnitt 6 der Scheibenbaugruppe 2, sondern auch am Anbauteil 3 selbst angeordnet sein kann. Dies bietet sich insbesondere bei geradlinig verlaufenden Anbauteilen an. Außerdem ist es durch eine lösbare Verbindung von Klammerabschnitt und Verbindungsabschnitt möglich, trotz Verwendung des gleichen Verbindungsabschnitts unterschiedliche Klammervarianten einzusetzen, beispielsweise für verschiedenartige Anbauteile oder gleichartige Anbauteile unterschiedlicher Hersteller. Die Verwendbarkeit des Verbindungsabschnitts ist damit universeller.

Der in Figuren 5a, 5b und 5c gezeigte Klemmhalter 1 ist derart ausgebildet, dass die unterhalb der Klemmflügel 11 durch deren Abkantungen entstandenen Ausnehmungen 19 am Klammerteil 4' mit den Haltefortsätzen 20 des Verbindungsteils 5' in Deckung gebracht werden können, so dass die Unterseite des Klammerteils 4' auf der Oberseite des Verbindungsteils 5' aufliegt. Sodann kann das Klammerteil 4' seitwärts unter die durch die Haltefortsätze 20 ausgebildeten, übergreifenden Klemmnuten 21 geschoben werden, so dass die Haltefortsätze 20 das Klammerteil 4' übergreifen. Die sich gegenüber liegenden Haltefortsätze 20 mit den darin angeordneten Klemmnuten 21 sind dabei bevorzugt einander zugewandt ausgerichtet, so dass sich das Klammerteil 4' mit den nach außen weisenden Längsrändern zwischen den Haltefortsätzen 20 befindet und von den Haltefortsätzen 20 bzw. den Klemmnuten 21 von außen übergriffen wird. Erst diese Maßnahme ermöglich überhaupt, das Verbindungsteil 5' derart auszubilden, dass am Verbindungsteil 5' ein außenseitig umlaufender Dichtbereich 7 ausgebildet werden kann.

Wie bei allen in den Figuren gezeigten Klemmhaltern ist auch an dem in den Figuren 5a, 5b und 5c dargestellten Klemmhalter 1 dadurch, dass das Verbindungsteil 5' die Klemmflügeln 11 des Klammerteils 4' seitlich überragt, ein Dichtbereich bzw. eine Dichtfläche 7 ausgebildet, die beim Spritzgussprozess den Klammerabschnitt 4 bzw. das Klammerteil 4', insbesondere also die Klemmflügel 11, von eingespritztem Kunststoff freizuhalten vermag.

Soweit bei den vorstehend beschriebenen Klemmhaltern stets von einem Klammerabschnitt bzw. einem Klammerteil aus Metall die Rede war, wird der Fachmann ohne weiteres erkennen, dass je nach zu erwartender Belastung und je nach zu gewährleistender Abziehkraft auch Klammerabschnitte aus anderen Materialien, insbesondere auch aus Kunststoffen, in Frage kommen können.

Die in den Figuren dargestellten Klammerabschnitte weisen jeweils vier Klemmflügel auf, die abwechselnd entgegengesetzt ausgerichtet sind. Die Erfindung ist selbstverständlich nicht auf eine solche Ausführung beschränkt, weder was die Anzahl, noch was die Ausrichtung oder Gestaltung der einzelnen Klemmflügel angeht.

**Bezuciszeichentiste**
- 1: Klemmhalter
- 2: Scheibenbaugruppe
- 3: Anbauteil, insbesondere Zierleiste
- 4: Klammerabschnitt
- 4': Klammerteil
- 5: Verbindungsabschnitt
- 5': Verbindungsteil
- 6: Rahmenabschnitt
- 7: Dichtbereich/Dichtfläche
- 8: Fensterscheibe
- 9: Kleberaupe
- 10: Karosserieblech
- 11: Klemmflügel
- 12: Haltestege
- 13: Sichtlippe/Dichtlippe
- 14: erste, obere Blechlage
- 15: zweite, untere Blechlage
- 16: Hinterschnitt
- 17: Stoß
- 18: Aufsetzschräge
- 19: Ausnehmungen
- 20: Haltefortsätze
- 21: Klemmnut

## Patentansprüche

1. Klemmhalter (1), der eingerichtet ist, als integraler Bestandteil einer eine Fahrzeugkarosserieöffnung verschließenden Scheibenbaugruppe (2) ein Anbauteil (3) an der Scheibenbaugruppe zu halten, aufweisend zumindest einen Klammerabschnitt (4), auf den das Anbauteil (3) aufsteckbarist, sowie einen Verbindungsabschnitt (5), der mit einem Rahmenabschnitt (6) der Scheibenbaugruppe (2) unlösbar verbindbar ist, wobei
der Verbindungsabschnitt (5) und der Klammerabschnitt (4) zur Fertigstellung der Scheibenbaugruppe (2) gemeinsam in ein Spritzgusswerkzeug einlegbar sind, **dadurch gekennzeichnet, dass** der Klammerabschnitt (4) als Metallklammer ausgebildet ist und der Verbindungsabschnitt (5) den Klammerabschnitt (4) unter Ausbildung eines umlaufenden Dichtbereichs (7) nach außen hin überragt.

2. Klemmhalter nach Anspruch 1, **dadurch gekennzeichnet, dass** der Verbindungsabschnitt (5) als plattenförmiges KunststofFteilausgebildetist.

3. Klemmhalter nach einem der vorhergehenden Ansprüche, **dadurch gekennzeichnet, dass** der Klammerabschnitt (4) von einem Klammerteil (4') gebildet ist, der lösbar auf einem den Verbindungsabschnitt (5) ausbildenden Verbindungsteil (5') gehalten ist.

4. Klemmhalter nach einem der Ansprüche 1 oder 2, **dadurch gekennzeichnet, dass** der der Klammerabschnitt (4) von einem Klammerteil (4') gebildet ist, der von einem den Verbindungsabschnitt (5) ausbildenden Verbindungsteil (5') formschlüssig umspritzt ist.

5. Klemmhalter nach Anspruch 1, **dadurch gekennzeichnet, dass** der Verbindungsabschnitt (5) und der Klammerabschnitt (4) werkstoffeinstückig, insbesondere als einstückiges Blechformteil, ausgeführt sind.

6. Klemmhalter nach einem der vorhergehenden Ansprüche, **dadurch gekennzeichnet, dass** der Verbindungsabschnitt (5) mit einem Haftvermittler versehen ist.

7. Klemmhalter nach einem der Ansprüche 1 bis 3, **dadurch gekennzeichnet, dass** der Verbindungsabschnitt (5) oder das Verbindungsteil (5') beidseitig des Klammerabschnitts (4) oder des Klammerteils (5') Haltefortsätze (20) aufweist, die einander zugewandte Klemmnuten (21) aufweisen, welche einen nach außen weisenden Randbereich des Klammerabschnitts (5) oder Klammerteils (5') übergreifen.

8. Auf die Öffnung einer Kraftfahrzeugkarosserie aufsetzbare Scheibenbaugruppe (2) mit einer Fensterscheibe (8), einem an der Fensterscheibe (8) randseitig vorgesehenen, insbesondere an die Scheibe (8) angespritzten Rahmenabschnitt (6) und einem Halter zur Anbringung eines Anbauteils (3) an der Scheibenbaugruppe (2), **dadurch gekennzeichnet, dass** der Halter ein Klemmhalter (1) nach einem der vorhergehenden Ansprüche ist.

## Claims

1. Retaining clip (1) which, as an integral component of a disc assembly (2) that locks a vehicle body opening, is designed so as to retain an attachment part (3) on the disc assembly, having at least one clip section (4), onto which the attachment part (3) can be mounted, and a connection section (5) which can be non-detachably connected to a frame section (6) of the disc assembly (2), wherein
in order to produce the disc assembly (2), the connection section (5) and the clip section (4) can be jointly inserted into an injection moulding tool, the clip section (4) is designed as a metallic clip and the connection section (5) projects beyond the clip section (4), forming a circumferential sealing region (7).

2. Retaining clip according to claim 1, **characterized in that** the connection section (5) is implemented as a plate-shaped plastic part.

3. Retaining clip holder according to any one of the preceding claims, **characterized in that** the clip section (4) is formed from a clip part (4') that is detachably retained on a connection part (5') that forms the connection section (5).

4. Retaining clip holder according to claims 1 or 2, **characterized in that** the clip section (4) is formed from a clip part (4') which is extrusion-coated by a the connection part (5') that forms part of the connection section (5).

5. Retaining clip according to claim 1, **characterized in that** the connection section (5) and the clip section (4) are produced from a single part in the same material, in particular as a one-piece shaped sheet-metal part.

6. Retaining clip according to any one of the preceding claims, **characterized in that** the connection section (5) is provided with a bonding agent.

7. Retaining clip holder according to any one of claims 1 to 3, **characterized in that** the connection section (5) or the connection part (5') has retaining projections (20) on both sides of the clip section (4) or of the clip part (4'), which have retaining grooves (21) facing each other that extend beyond an outside-facing edge region of the retaining clip section (4) or retaining clip part (4').

8. Disc assembly (2) which can be mounted onto the opening of a motor vehicle body having a window pane (8), a frame section (6) provided at the edge of the window pane (8), in particular moulded onto the pane (8), and a holder for mounting an attachment part (3) on the disc assembly (2), **characterized in that** the holder is a retaining clip (1) according to any one of the preceding claims.

## Revendications

1. Agrafe de retenue (1), laquelle est étudiée, en tant que composant intégral d'un ensemble de fenêtre (2) fermant une ouverture de carrosserie de véhicule automobile, pour maintenir une pièce rapportée (3) sur l'ensemble de fenêtre, présentant au moins une section d'agrafe (4) sur laquelle la pièce rapportée (3) peut être placée ainsi qu'une section de liaison (5), laquelle peut être reliée de manière non détachable avec une section de cadre (6) de l'ensemble de fenêtre (2), moyennant quoi
la section de liaison (5) et la section d'agrafe (4) peuvent être déposées en commun dans un moule d'injection pour la fabrication de l'ensemble de fenêtre (2),
**caractérisée en ce que** la section d'agrafe (4) est réalisée en tant qu'agrafe métallique et **en ce que** la section de liaison (5) dépasse vers l'extérieur la section d'agrafe (4) en formant une zone d'étanchéité périphérique (7).

2. Agrafe de retenue selon la revendication 1, **caractérisée en ce que** la section de liaison (5) est réalisée en tant que pièce en matière plastique en forme de feuille.

3. Agrafe de retenue selon l'une des revendications précédentes, **caractérisée en ce que** la section d'agrafe (4) est formée par une partie d'agrafe (4'), laquelle est maintenue de manière détachable sur une partie de liaison (5') formant la section de liaison (5).

4. Agrafe de retenue selon l'une des revendications 1 ou 2, **caractérisée en ce que** la section d'agrafe (4) est formée par une partie d'agrafe (4'), laquelle est entourée par moulage par injection par liaison de forme par une partie de liaison (5') formant la section de liaison (5).

5. Agrafe de retenue selon la revendication 1, **caractérisée en ce que** la section de liaison (5) et la section d'agrafe (4) sont réalisées d'une seule pièce, en particulier en tant que pièce moulée en tôle d'un seul tenant.

6. Agrafe de retenue selon l'une des revendications précédentes, **caractérisée en ce que** la section de liaison (5) est munie d'un promoteur d'adhésion.

7. Agrafe de retenue selon l'une des revendications 1 à 3, **caractérisée en ce que** la section de liaison (5) ou la partie de liaison (5') présente des prolongements de retenue (20) des deux côtés de la section d'agrafe (4) ou de la partie d'agrafe (4'), lesquels présentent des rainures de serrage (21) orientées les unes vers les autres, lesquelles recouvrent une zone de bord orientée vers l'extérieur de la section d'agrafe (4) ou de la partie d'agrafe (4').

8. Ensemble de fenêtre (2) pouvant être placé sur l'ouverture d'une carrosserie de véhicule automobile avec une vitre (8), une section de cadre (6) prévue du côté du bord de la vitre (8), en particulier moulée par injection sur la vitre (8) et une fixation pour apposer une pièce rapportée (3) sur l'ensemble de fenêtre (2), **caractérisé en ce que** la fixation est une agrafe de retenue (1) selon l'une des revendications précédentes.
